# EUROPEAN PATENT SPECIFICATION

(11) **EP 1 832 398 B1**
(45) Date of publication and mention of the grant of the patent: **07.05.2008**
(21) Application number: 06110929.4
(22) Date of filing: 10.03.2006
(51) Int. Cl.: B25J 9/16

(54) **A robot controller, a computer unit and a base module for a robot controller**
Robotersteuerung, Rechnereinheit und Basismodul für eine Robotersteurung
Unité de commande de robot, unité d' ordinateur et module de base pour une unité de commande de robot

(43) Date of publication of application: 12.09.2007
(73) Proprietor: ABB RESEARCH LTD., 8050 Zürich (CH)
(72) Inventor: Gu, Chun-Yuan, 722 46, Västerås (SE); Carlsson, Per V, 722 31, Västerås (SE); Mellander, Roger, 722 33, Västerås (SE); Zahrai, Said, 724 82, Västerås (SE)
(74) Representative: Reyier, Ann-Mari

(56) References cited:
- EP-A- 0 298 396
- EP-A- 1 175 133
- WO-A-03/103903
- US-A- 5 850 338
- THIELEMANS H ET AL: "HEDRA: HETEROGENEOUS DISTRIBUTED REAL-TIME ARCHITECTURE" REAL TIME SYSTEMS, KLUWER ACADEMIC PUBLISHERS, DORDRECHT, NL, vol. 14, no. 3, 1 May 1998 (1998-05-01), pages 95-107, XP000766367 ISSN: 0922-6443

## Description

### FIELD OF THE INVENTION

The present invention relates to a computer unit suitable for a robot controller in an industrial robot system including one or more actuators.

The present invention also relates to a base module for a robot controller in an industrial robot system.

The present invention also relates to a robot controller in an industrial robot system.

### PRIOR ART

An industrial robot system includes one robot controller and one or more actuators, such as manipulators and/or external axes. The robot controller comprises a main computer adapted to execute robot programs, including movement instructions for the actuators, and one or more axis computers which receive control instructions from the main computer. The control instructions from the main computer are transformed by the axis computer into control signals for the drive unit of the actuator. The function of the axis computer is thus to ensure that orders from the main computer are carried out. The task of the main computer is to plan the movement path of the robot, so-called path planning, and the task of the axis computer is to ensure that the robot completes the planned path. The main computer also has many other tasks, such as handling I/O-systems, application programs, interpolation and communication with external devices and systems. The safety of the system is usually implemented making use of existing units mentioned above combined with additional devices.

Due to hard real-time requirements, each actuator in a multi-robot system needs at least one axis computer. On the other hand, it is beneficial to use one main computer for all actuators. This will result in reduced cost for the multi-robot system and gives better opportunities for synchronized control of a number of actuators. This approach causes a difficulty in the choice of components of the robot controller. Basically, a suitable solution for a single-robot system is not sufficient for a multi-robot system and a multi-robot main computer is oversized for a single-robot application. Thus, fully optimized solutions for single- and multi-robot systems will look different. However, use of different hardware and software for different applications is not an attractive solution, since it leads to additional costs and enormous engineering work.

A conventional robot controller for an industrial robot system comprises a unit in which the main computer and the axis computers are mounted in one and the same cabinet with a common power supply and a common casing. The control system is provided with an internal bus for communication between the different parts. In multi-robot applications, the robots are either provided with individual robot controllers, or with a common robot controller including a main computer and at least one axis computer per actuator.

A disadvantage with the conventional robot controllers is that they are inflexible. To be able to add more actuators, the robot controller must either be oversized from the start regarding computer utility, or the whole of, or parts of, the robot controller must be replaced or be rebuilt to obtain the necessary computer utility.

A solution to this problem has been proposed in the international patent application WO 03/103903 A1, which discloses a robot controller that is divided into a plurality of separate modules, adapted to handle various functions. Each module is provided with its own power supply. The main computer is arranged in one separate module and the axis computers are arranged in other separate modules. Thereby, it is easy to extend the computer capacity of the robot controller by connecting new modules. For example, if a new actuator is to be connected to the robot controller, it is sufficient to connect another module including an axis computer to upgrade the robot controller. Although, this solution is suitable in a multi-robot system, it is not optimal in a single-robot system as cost and size of the robot controller is increased due to the modular system.

A computer unit for a numerical control system with configurable NC Boards with processors, is disclosed in US 5850338 A.

### OBJECTS AND SUMMARY OF THE INVENTION

The object of the present invention is to provide a cost efficient and high performance computer unit for a robot controller, which is suitable for a single as well as a multi-robot system.

This object is achieved by a computer unit as defined in claim 1.

Such a computer unit comprises a first and a second processor, a first set of sockets adapted to enable external communication between the first processor and peripheral units, a second set of sockets adapted to enable external communication between the second processor and peripheral units, and a connection between the first and second processor to enable internal communication between the processors. The computer unit is adapted to change configuration between three types of configuration modes, namely: a first configuration mode wherein the first processor and the first set of sockets are configured to be a main computer and the second processor and second set of sockets are configured to be an axis computer, a second configuration mode wherein the first and second processors and the first and second sets of sockets are configured to be a dual processor main computer, and a third configuration mode wherein the first processor and the first set of sockets are configured to be a first axis computer and the second processor and second set of sockets are configured to be a second axis computer.

This solution makes it possible to use the same type of computer units for a single-robot system as well as for a multi-robot system. The computer units are optimized dependent on their use in a single- or a multi-robot system. In a single-robot system, only one computer unit is needed, which is configured into the first configuration mode, i.e. the computer unit is configured to include one main computer and one axis computer. In a multi-robot system, two or more computer units are used. The configuration of the computer units depends on the demand of computer power. If a more powerful main computer is desired, the computer unit is configured into the second configuration mode, in which the computer unit is configured to be a dual processor main computer.

The present invention reduces production cost due to the fact that the same hardware can be used for different applications. The size of the computer unit is reduced compared to the prior art modules having a separate module for the main computer and each axis computer. For a large multi-robot system, partitioning the main computer into two different processing units improves the response of the system to external events. As the power dissipation in each processor grows faster than linear, the use of two smaller processors instead of one large has a positive impact on the cooling system as well.

According to an embodiment of the invention, the computer unit is adapted, upon start-up, to retrieve and store configuration data including information on which peripheral units the first and second sets of sockets are connected to. The various configuration modes require different configuration data. Thus, the configuration data includes specific information dependent on the selected configuration mode. The configuration data includes information on which peripheral units each of the processors are allowed to communicate with, and the routes to peripheral units. Which peripheral units the processors are allowed to communicate with depends on the selected configuration mode. For example, when the computer is configured into the third configuration mode, the first processor is configured as an axis computer for control of a first actuator and the second processor is configured as an axis computer for control of a second actuator, and the first processor communicates with the first actuator and the second processor communicates with the second actuator.

Preferably, the communication data also includes information on how to communicate with the peripheral units, such as information on communication protocols. Thus, the computer unit retrieves a complete set of information needed to be able to communicate with the peripheral units.

According to an embodiment of the invention, the configuration data includes software to be run on the processors; which software is loaded depends on the desired configuration mode. Conveniently, the configuration data also includes configuration data for the software and the computer unit is adapted to configure the processors and the software to desired computers by means of the configuration data. In dependence on which type of computer the processors are to be configured to, different software is needed. When the software is run on the processor, the processor becomes either a main computer, a part of a dual processor main computer, or an axis computer.

According to an embodiment of the invention, the computer unit comprises a non-volatile storage unit including program instruction for initiation of the configuration of the computer unit, the program instructions including information on where the configuration data is to be retrieved. Upon start of the computer unit, the computer unit has to be configured into one of the tree possible configuration modes. Program instruction for initiation of the configuration of the computer unit is stored in a non-volatile storage unit. The instructions include instructions on how and where to retrieve configuration data necessary to be able to carry out the configuration. The configuration data is either stored somewhere on the computer unit, or on a peripheral unit. A peripheral unit may send the configuration data to the computer unit, and then the instruction is to wait for configuration data to arrive.

According to an embodiment of the invention, the computer unit comprises at least one replaceable mass storage unit including configuration data for one of the configuration modes, and the computer unit is adapted to read configuration data from the mass storage unit and to configure the computer unit accordingly. Thus, updating of the system can be performed by change of a single mass storage unit. For example, there are two replaceable mass storage units and a first of the mass storage units includes configuration data for the first configuration mode and a second of the mass storage units includes configuration data for the second configuration mode. The computer unit is adapted to read configuration data from the presently connected mass storage unit. This embodiment makes it easy for an operator to select a desired configuration mode by connecting a mass storage unit having configuration data for the desired configuration mode. It is also easy for the operator to change to another configuration mode by changing to another mass storage unit having other configuration data. Upon start of the computer unit, it reads configuration data from the mass storage unit, which is presently connected to the unit.

According to an embodiment of the invention, the computer unit is adapted to determine whether it is provided with a mass storage unit or not, and if not to retrieve configuration data from a peripheral unit. A mass storage unit is a rather expensive unit. This embodiment is cost-effective, since it does not require a mass storage unit for each configuration mode.

According to an embodiment of the invention, when the computer is configured into the second configuration mode, the first processor is configured to be responsible for periodical and time critical course of events, such as motion planning, and the second processor is configured to be responsible for event driven course of events. The tasks on the main computer are divided according to their nature: time critical or even based. Thereby, the load on each processor becomes larger, which leads to a more efficient use of the processors. The response to all I/Os are improved.

According to an embodiment of the invention, each of the processors of the computer unit comprises at least one connection to Ethernet to enable external communication and if necessary retrieve data for configuration at start-up.

Another object of the present invention is to provide a method for configuration of a computer unit according to claim 1. The method comprises: loading configuration data for the desired configuration mode, and connecting the sets of sockets to peripheral units according to the desired configuration mode.

Another object of the present invention is to provide base module for a robot controller.

Such a base module comprises a cabinet, a power supply, and a drive unit adapted to control motors of an actuator, and is designed to receive a computer unit including either a main computer or an axis computer. The same base module can be used for the main computer as well as the axis computers. Thus, the production costs are reduced. Preferably, the module is provided with an opening designed to receive the computer unit.

The computer unit for the main computer and the axis computers has the same outer dimensions. A robot controller may include one or more such base modules.

According to the invention the control module is designed to receive a computer unit according to claim 1. This is cost-effective since the number of different components, which have to be produced, is reduced. The same type of base module and the same type of computer unit can be used for the main computer as well as the for the axis computers. Thereby, production costs are reduced.

Another object of the present invention is to provide a cost-effective robot controller, which is suitable for a single- as well as a multi-robot system.

According to one embodiment of the invention, the robot controller comprises at least one computer unit according to claim 1.

According to one embodiment of the invention, the robot controller has a computer unit configured according to the first configuration mode. This robot controller is useful in a single-robot system.

According to another embodiment of the invention, the robot controller comprises at least two computer units, wherein a first of the computer units is configured according to the second configuration mode, and a second of the computer units is configured according to the third configuration mode. This robot controller is useful in a multi-robot system.

According to one embodiment of the invention, the robot controller comprises at least two separate base modules, each including a drive unit adapted to control motors of a manipulator. A first of the base modules includes a computer unit having a main computer and a second of the base modules includes a computer unit having two axis computers. The base modules are connected to each other such that the main computer and the axis computers communicate with each other, and one of the axis computers communicate with the drive unit of the first base module and the other axis computer communicates with the drive unit of the second base module. Due to the fact that each of the base modules is provided with a drive unit, it is possible to control two manipulators with only two base modules. Thus, the number of modules needed is reduced and thereby the hardware cost for the robot controller is reduced.

### BRIEF DESCRIPTION OF THE DRAWINGS

The invention will now be explained more closely by the description of different embodiments of the invention and with reference to the appended figures.
- Fig. 1a: shows a computer unit according to an embodiment of the invention.
- Fig. 1b: shows a computer unit according to another embodiment of the invention.
- Fig. 2a: shows the computer unit, shown in figure 1, configured into a first configuration mode.
- Fig. 2b: shows the computer unit shown in figure 1, configured into a second configuration mode.
- Fig. 2c: shows the computer unit shown in figure 1, configured into a third configuration mode.
- Fig. 3: shows a base module for a robot controller.
- Fig. 4: shows a base module including the computer unit shown in figure 1a.
- Fig. 5: shows a robot controller having a base module configured for control of a single actuator.
- Fig. 6: shows a robot controller having two base modules configured for control of two actuators.
- Fig. 7: shows a robot controller having three base modules configured for control of three actuators.
- Fig. 8: shows a robot controller having four base modules configured for control of four actuators.

### DETAILED DESCRIPTION OF PREFERRED EMBODIMENTS OF THE INVENTION

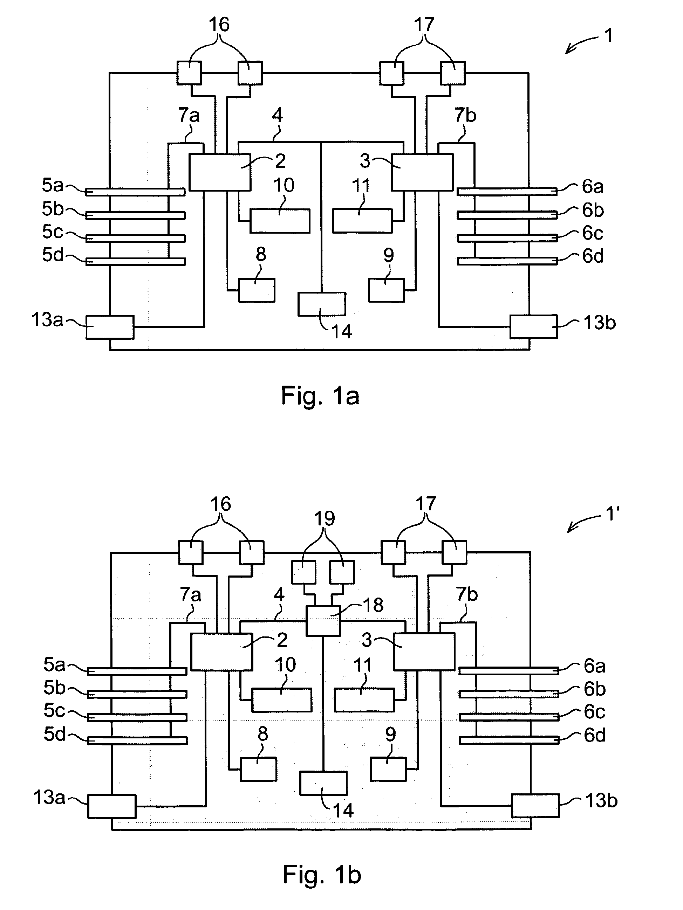

Figure 1a shows a computer unit 1 according to an embodiment of the invention. The computer unit 1 comprises a first processor 2, a second processor 3, and a connection 4 to enable internal communication between the processors. Preferably, the processors are of a highly integrated type of CPU, for example MPC8349. In this embodiment the processors are interconnected by a bus connection 4, for example a PCI-bus, (PCI=Peripheral Component Interconnect). Alternatively, the processors are connected through a direct link. Further, the computer unit 1 comprises a first set of sockets 5a-d adapted to enable external communication between the first processor 2 and peripheral units, and a second set 6a-d of sockets adapted to enable external communication between the second processor 3 and peripheral units. In this embodiment the set of sockets includes a plurality of PCl-slots for receiving expansion cards for the peripheral units. The first set of sockets 5a-d is connected to the first processor 2 via a bus connection 7a, for example a PCI-bus, and the second set of sockets 6a-d is connected to the second processor 3 via a bus connection 7b.

The computer unit 1 is adapted to change configuration between three types of configuration modes: a first configuration mode wherein the first processor 2 and the first set of sockets 5a-d are configured to be a main computer and the second processor 3 and the second set of sockets 6a-d are configured to be an axis computer, a second configuration mode wherein the first and second processors and the first and second sets of sockets are configured to be a dual processor main computer, and a third configuration mode wherein the first processor and the first set of sockets are configured to be a first axis computer and the second processor and second set of sockets are configured to be a second axis computer.

The computer unit 1 further comprises two non-volatile storage units 8,9, for example, a flash memory, including program instruction for initiation of the configuration of the computer unit upon start of the computer unit. The program instructions include information on where configuration data is to be retrieved. As a non-volatile memory is the most expensive memory in a computer, it is advantageous to save configuration data in a cheaper memory, and only have instructions as to how to retrieve the configuration data on the non-volatile memory.

The computer unit 1 further comprises two memory units 10,11, such as RAM, for storage of data and software for the processors. Each processor is connected to one of the memory units 10,11. Further, the computer unit is provided with a holder (not shown in the figure) for a mass storage unit 14, for example a CF (Compact Flash), a USB storage device, or a hard disc. The holder is arranged so that the mass storage unit can easily be attached to and detached from the computer unit. Thereby, it is possible for a user to remove a mass storage unit carrying data for one of the configuration modes, and replace it with another mass storage unit carrying data for another of the configuration modes. In this embodiment, the computer unit can comprise two different replaceable mass storage units 14 (only one being shown in the figure). One of mass storage units carries configuration data for the first configuration mode and the other unit carries configuration data for the second configuration mode. It is only possible to connect one mass storage unit at a time to the computer unit. Upon start of the computer unit, for example when the controller is switched on, one of the processors is adapted to read configuration data from the connected mass storage unit and to configure the computer unit accordingly.

When the controller is switched on, the initiation instructions from the non-volatile memory are executed. If there is a mass storage attached to the holder, one of the processors becomes Master on the common bus 4, reads configuration data from the connected mass storage unit 14, and configures the computer unit accordingly. If the holder is empty, i.e. if there is no mass storage attached to the holder, the processor is instructed to wait for configuration data, which is sent from an external unit. For example, if the computer unit is to be configured into the third configuration mode, in which both processors are configured to be axis computers, it is suitable that the main computer provides the computer unit with configuration data. Thus, if the user desires to configure the computer unit into two axis computers, the user has to remove the mass storage unit from the holder before switching on the controller.

The configuration data includes information on which peripheral units the first and second sets of sockets are connected to, such as the addresses to the expansion cards fitted in the PCI-slots. The configuration data also includes information on how to communicate with the peripheral units, such as communication protocols. Further the configuration data also includes software modules to be run on the processors in order to make them function as the desired computers, i.e. as a single processor main computer, a dual processor main computer, or an axis computer. The contents of the software modules depend on the desired configuration mode. The configuration data also includes configuration data for the software modules. The computer unit is adapted to configure the processors and the software modules to the desired computers by means of the configuration data. Alternatively, a part of the configuration data is stored on the mass storage unit 14, for example information on which peripheral units the sockets are connected to and information on how to communicate with the peripheral units, and another part of the configuration data is stored on a peripheral unit. The mass storage unit 14 may also carry control programs for the actuators.

The computer unit comprises at least one connection 16, in this embodiment two connections, adapted to enable external communication between the first processor 2 and external devices via Ethernet, and at least one connection 17, in this embodiment two connections, adapted to enable external communication between the second processor 3 and external devices via Ethernet. If a robot controller includes more than one computer unit, the computer units communicate with each other through the Ethernet connections 16 and 17. In an alternative embodiment, configuration data is received through the Ethernet connection 16 or 17. The computer unit is equipped with at least one USB interface 13a-b to be used for different purposes, such as downloading the data or uploading of the programs. As an alternative to the reconfiguration process outlined above, i.e. replacement of the mass storage device, a USB device can be used. Inserting a USB storage device with a given structure can instruct the computer unit that an update or a new configuration is to be loaded. The corresponding CPU will then be responsible for actual replacement of the data.

In the following, an example of a method for configuration of the computer module, as shown in figure 1, is described. The configuration method includes the following steps:
A) If the first or second configuration mode is desired, a mass storage unit including configuration data for the desired configuration mode is attached to the mass storage holder. If the third configuration mode is desired the mass storage holder should be emptied.
B) Expansion cards for the desired configuration mode are mounted in the sockets. Cables from the peripheral units are connected to the expansion cards.
C) The computer unit is switched on.
D) The processors retrieve information on which of the processors is Master and which one is Slave, and where to find configuration data from the non-violent memory 8,9.
E) The Master processor retrieves the configuration data and stores it in the memory units 10,11. If the computer unit is switched on without having a mass storage unit in the holder, it is understood that the third configuration mode is desired and the Master processor will start to look on the network for its main computer, which sends configuration data to the computer unit.
F) The Master processor configures the software modules by means of the retrieved configuration data.
G) The Master processor retrieves the control programs for the actuators and stores them in the memory units 10,11.

Figure 1b shows a computer unit 1' according to another embodiment of the invention. The computer unit further comprises a programmable logic 18, for example an FPGA and components 19, which is any component with a logical interface such as a memory, an A/D converter, a filter or an auxiliary processor unit. The programmable logic 18 is connected to the common bus 4 and functions as a switch for switching between the memory 14, the components 19 and the first and second processors 2,3.

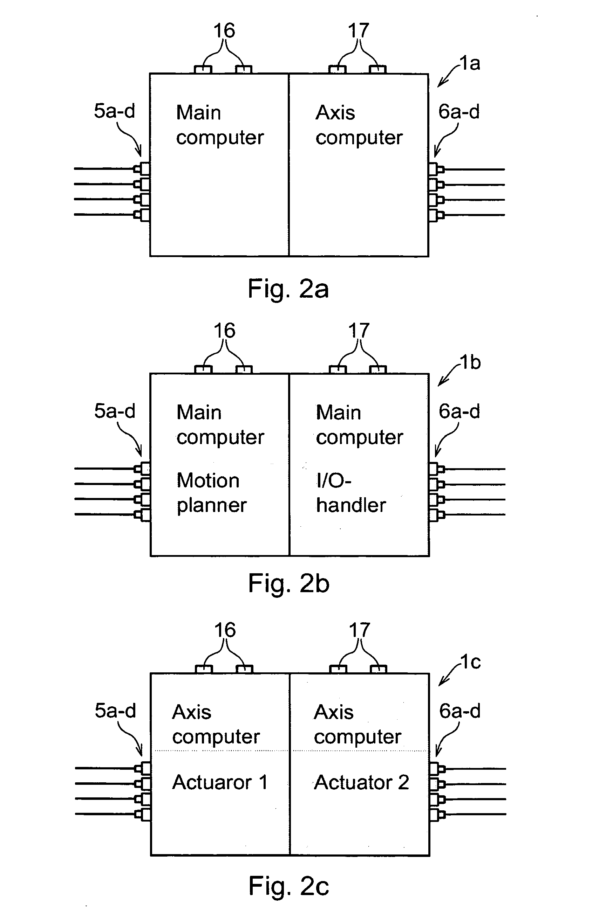

Figure 2a shows a computer unit 1a configured into the first configuration mode. The left processor is configured to be a single processor main computer and the right processor is configured to be an axis computer. The left set of sockets 5a-d is configured as a main computer interface and the right set of sockets 6a-d is configured as an axis computer interface. For example, a PCI card for safety is connected to socket 5a, a PCI card to a Fieldbus Master is connected to socket 5b, a PCI card to a Fieldbus Slave is connected to socket 5c, and a PCI card to slow sensors, such as vision cameras, is connected to socket 5d. One of the Ethernet connections 16 is connected to a Teach Pendant Unit (TPU) and the other to a LAN. The set of sockets 6a-d is used for communication with the drive unit of the actuator. For example, a PCI card for safety is connected to socket 6a, a PCI card to a 6-axis actuator is connected to socket 6b, a PCI card to an external axis is connected to socket 6c, and a PCI card to fast sensors, such as force sensors, is connected to socket 6d. The most important sensor input is the feedback from the motor of the actuator, but other signals can also be of interest for special applications, such as for force control.

Figure 2b shows a computer unit 1b configured into the second configuration mode, i.e. into a dual processor main computer. The left processor is configured to be responsible for periodical and time-critical course of events, and the right processor is configured to be responsible for event-driven course of events. This means that the left processor is responsible for the motion part, for example path planning, and the right processor becomes an I/O computer. The sockets are then used for connection of fieldbusses and similar kinds. The set of sockets 5a-d and 6a-d are configured as an interface to a dual processor main computer. The set of socket 5a-d are, for example, connected to a PCI card for safety, a PCI card to a first axis computer, a PCI card to a second axis computer, and a PCI card to slow sensors. The set of socket 6a-d are, for example, connected to a PCI card for safety, a PCI card to a Fieldbus Master, a PCI card to an external axis, and a PCI card to fast sensors. This dual-processor computer will be able to control two axis computers.

Figure 2c shows a computer unit 1c configured into the third configuration mode. The left and the right processors are configured to be axis computers. Each of the sets of sockets 5a-d and 6a-d is configured as an axis computer interface. In this case, the PCI slots on both sides are used for interfacing the drive unit of the actuators. For example, PCI cards for safety is connected to sockets 5a, 6a, a PCI card to a first 6-axis actuator is connected to socket 5b, a PCI card to a second 6-axis actuator is connected to socket 6b, a PCI card to a first external axis is connected to socket 5c, a PCI card to a second external axis is connected to socket 6c, and PCI cards to fast sensors are connected to sockets 5d, 6d. The most important sensor input is the feedback from the motor of the actuator, but other signals can also be of interest for special applications.

It is advantageous to use the proposed computer unit as an element in a robot control system, also denoted a robot controller. This allows packaging of the control system into cabinets with similar contents that can be used as one single-robot control system or a multi-robot control system. A cabinet and its content is denoted a base module.

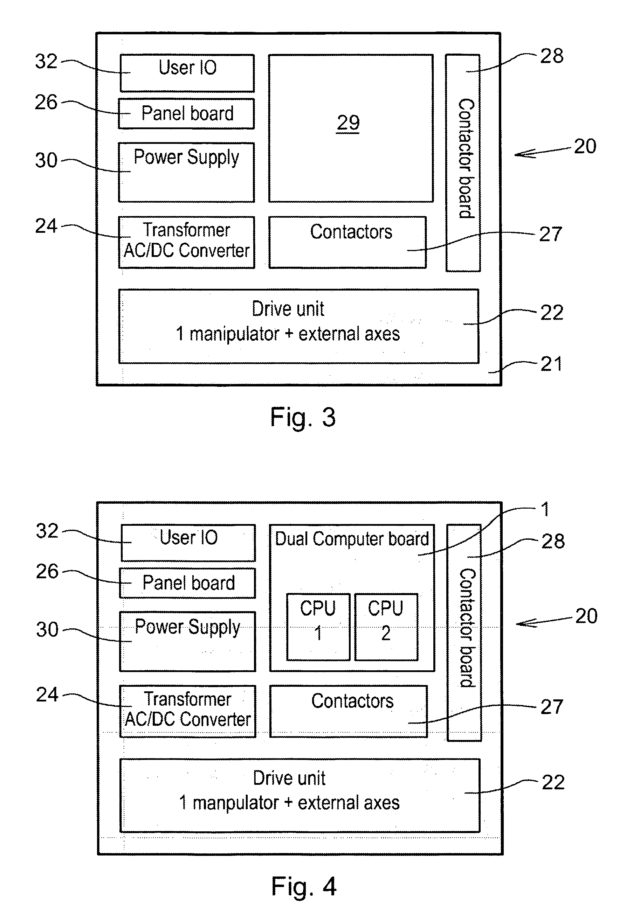

Figure 3 shows an example of a base module 20 for a robot controller. The base module comprises a cabinet 21 enclosing a drive unit 22 for one manipulator and, for example, one or more external axes, a transformer and an AC/DC converter 24, a panel board for safety 26, contactor 27, a contactor board 28, power supply 30 for the module, and extension possibilities for additional user I/O 32. The base module 20 has an opening 29 adapted to receive a computer unit including either a main computer or an axis computer. The base module 20 is also provided with connection means (not shown) to connect the computer unit to other parts of the base module and to other base modules included in the controller. For example, the computer unit can be the computer unit 1 described above. However, the computer unit can also be another type of computer unit, for example, including only one processor and not reconfigurable. A robot controller may include a plurality of separate base modules and a plurality of computer units having the same outer dimensions and which fits in the opening 29. In the following a plurality of examples will be described in connection to a base module having the reconfigurable dual processor computer unit described above. However, the invention is not limited to this type of computer module.

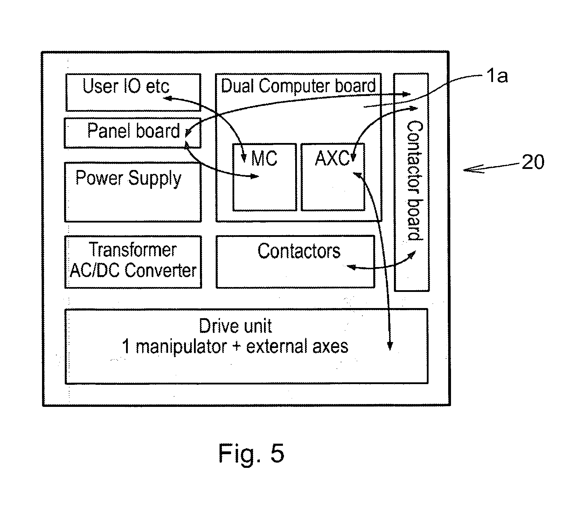

Figure 4 shows a base module 20 comprising the configurable computer unit 1, also denoted a dual computer board. The base module can then be configured as one single-robot control system, as shown in figure 5. The computer unit 1a is configured into a main computer (MC) and an axis computer (AXC). Communications between different parts of the base module are made by serial point to point links, as illustrated by arrows in the figure.

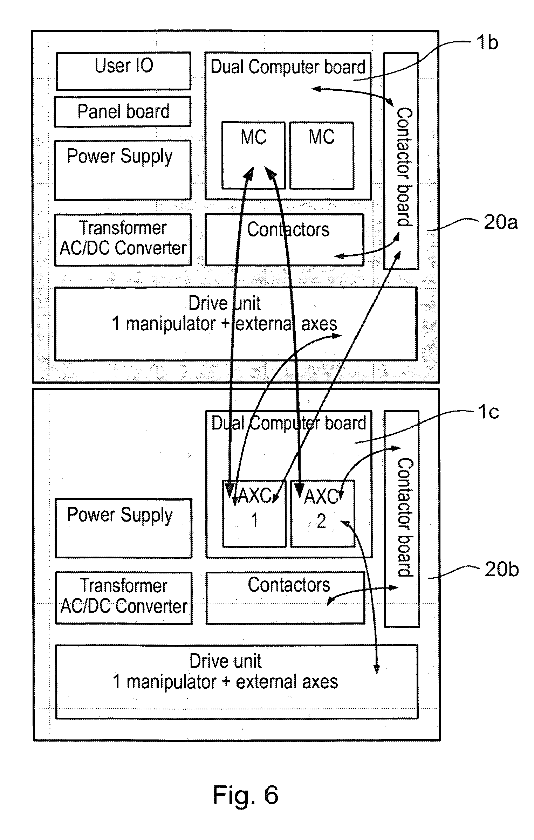

Figure 6 shows a robot controller having two base modules 20a-b configured for control of two actuators. The first base module 20a has a computer unit 1b configured as a dual processor main computer (MC) and the second base module 20b has a computer unit 1c configured as a two-axis computer. The second module 20b lacks the panel board and the user I/O unit. The main computer communicates with the axis computers through Ethernet, shown by thick arrows. The thin arrows indicate serial communication links between the axis computers and the rest of the system. One of the axis computers AXC1 communicates with the drive unit of the base module 20a and the other axis computer AXC2 communicates with the drive unit of the base module 20b.

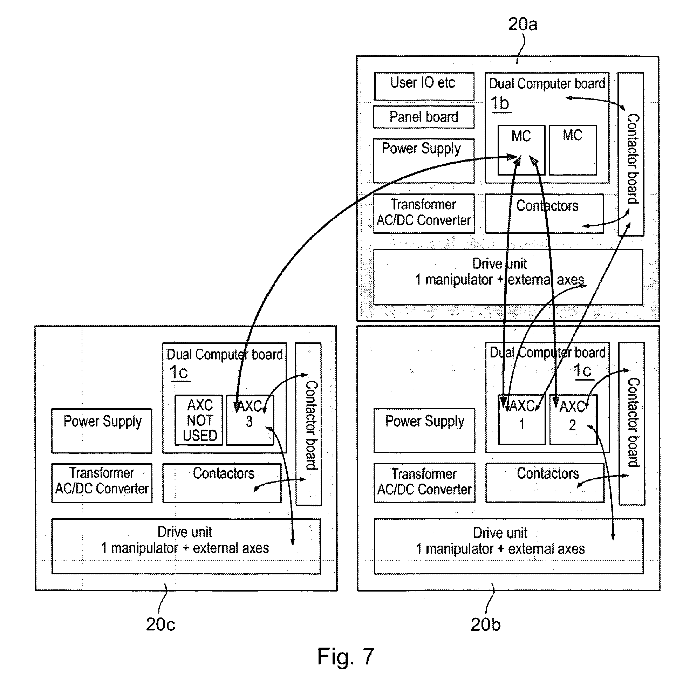

Figure 7 shows a robot controller having three base modules 20a-c configured for control of three actuators. Here, the third base module 20c is a copy of the second base module 20b where the second axis computer is not used. The thick arrows indicate Ethernet links and the thin arrows indicate serial links. As noticed here, for the third module, the communication is only trough the Ethernet, which does not require short distance between the modules.

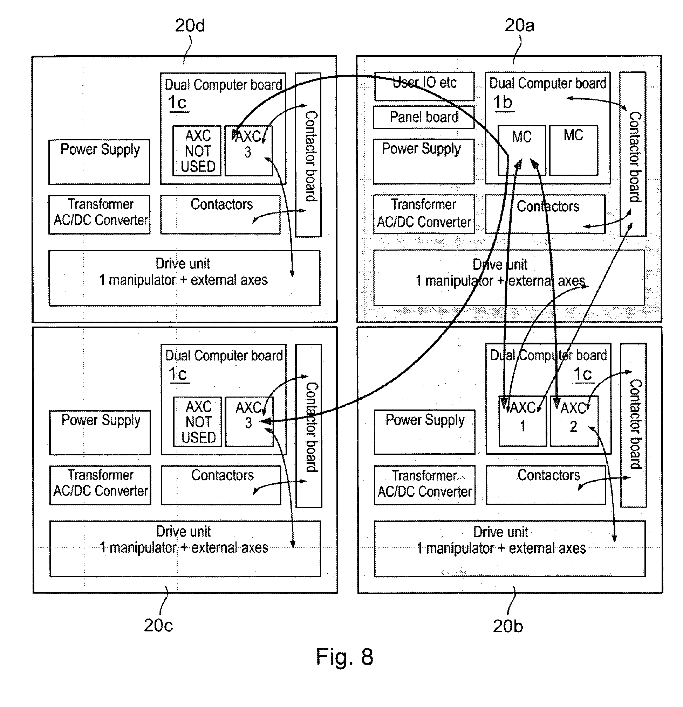

Figure 8 shows a robot controller having four base modules 20a-d configured for control of four actuators. The third and fourth module 20c-d are identical and do not need to be placed too close to the other modules 20a-b. An advantage with this embodiment is that the third and fourth module 20c-d can be located close to the actuator that it controls. In another embodiment it is possible to have only three base modules 20a-c for control of four actuators.

Finally, it should be noted that the contactors beneficially could be integrated with the computer module. That results in a reduction of the number of parts and additional cost reduction.

The present invention is not limited to the embodiments disclosed but may be varied and modified within the scope of the following claims. For example, the robot controller may include a first computer module configured into the first configuration mode and a second computer module configured into the third configuration mode.

## Claims

1. A computer unit (1,1a-c) for a robot controller, the computer unit comprising:
- a first and a second processor (2,3),
- a first set of sockets (5a-d) adapted to enable external communication between the first processor and peripheral units,
- a second set of sockets (6a-d) adapted to enable external communication between the second processor and peripheral units, and
- a connection (4) between the first and second processors to enable internal communication between the processors,
**characterized in that** the computer unit is adapted to change configuration between three types of configuration modes, namely:
- a first configuration mode wherein said first processor and said first set of sockets are configured to be a main computer and said second processor and second set of sockets are configured to be an axis computer,
- a second configuration mode wherein said first and second processors and said first and second sets of sockets are configured to be a dual processor main computer, and
- a third configuration mode wherein said first processor and said first set of sockets are configured to be a first axis computer and said second processor and second set of sockets are configured to be a second axis computer,
and the computer unit comprises a non-volatile memory (8,9) including program instruction for initiation of the configuration of the computer unit upon start of the computer unit, said program instructions including information on where configuration data is to be retrieved.

2. The computer unit according to claim 1, wherein the computer unit is adapted, upon start-up, to retrieve and store configuration data including information on which peripheral units said first and second sets of sockets can be connected to.

3. The computer unit according to claim 2, wherein said configuration data includes software to be run on the processors, which software depends on the desired configuration mode.

4. The computer unit according to claim 3, wherein the configuration data includes configuration data for said software, and the computer unit is adapted to configure the processors and said software to desired computers by means of said configuration data.

5. The computer unit according to any of the previous claims, wherein said computer unit comprises at least one replaceable mass storage unit (14) including configuration data for one of said configuration modes, and the computer unit is adapted to read configuration data from the connected mass storage unit and to configure the computer unit accordingly.

6. The computer unit according to claim 5, wherein a first of said mass storage units includes configuration data for said first configuration mode and a second of said mass storage units includes configuration data for said second configuration mode.

7. The computer unit according to claim 5 or 6, wherein the computer unit is adapted to determine whether it is provided with a mass storage unit or not, and if not to receive configuration data from a peripheral unit.

8. The computer unit according to any of the previous claims, wherein said first set of sockets is connected to the first processor via a bus, said second set of sockets is connected to the second processor via a bus, and said sockets are connections to peripheral units.

9. The computer unit according to any of the previous claims, wherein, when the computer is configured into said second configuration mode, the first processor is configured to be responsible for periodical and time-critical course of events and the second processor is configured to be responsible for event-driven course of events.

10. The computer unit according to any of the previous claims, wherein, the computer unit comprises a first connection to Ethernet adapted to enable external communication between the first processor and external devices via Ethernet, and a second connection to Ethernet adapted to enable external communication between the second processor and external devices via Ethernet.

11. The computer unit according to any of the previous claims, wherein, when the computer is configured into said third configuration mode, the first set of sockets is configured to be connected to a first actuator, and the second set of sockets is configured to be connected to a second actuator.

12. A robot controller, **characterized in that** is comprises at least one computer unit (1,1 a-c) according to claim 1.

13. The robot controller according to claim 12, wherein the computer unit (1a) is configured according to said first configuration mode.

14. The robot controller according to claim 13, wherein the robot controller comprises at least two computer units (1b-c) according to claim 1, wherein a first of the computer units (1b) is configured according to said second configuration mode, and a second of the computer units (1c) is configured according to said third configuration mode.

15. A base module (20) for a robot controller comprising, a cabinet (21), a power supply (30), and a drive unit (22) adapted to control motors of a manipulator, **characterized in that** the base module includes a computer unit according to claim 1.

16. The base module according to claim 15, wherein the module (20) is provided with an opening (29) designed to receive said computer unit.

17. A robot controller **characterized in that** it comprises at least two separate base modules (20a-d) according to claim 15, wherein a first of said base modules (20a) includes a computer unit (1b) configured as a main computer and a second of said base modules (20b) includes a computer unit (1 c) configured as two axis computers.

## Patentansprüche

1. Rechnereinheit (1, 1 a-c) für eine Robotersteuerung, wobei die Rechnereinheit aufweist:
einen ersten und einen zweiten Prozessor (2, 3),
einen ersten Satz Buchsen (5a-d), die angepasst sind zum Ermöglichen von externer Kommunikation zwischen dem ersten Prozessor und Peripherieeinheiten,
einen zweiten Satz Buchsen (6a-d), die angepasst sind zum Ermöglichen von externer Kommunikation zwischen dem zweiten Prozessor und Peripherieeinheiten, und
eine Verbindung (4) zwischen dem ersten und dem zweiten Prozessor zum Ermöglichen von interner Kommunikation zwischen den Prozessoren,
**dadurch gekennzeichnet, dass** die Rechnereinheit angepasst ist zum Ändern einer Konfiguration zwischen drei Arten von Konfigurationsmodi, insbesondere
einem ersten Konfigurationsmodus, bei dem der erste Prozessor und der erste Satz Buchsen gestaltet sind, dass sie ein Hauptrechner sind, und der zweite Prozessor und der zweite Satz Buchsen gestaltet sind, dass sie ein Achsrechner sind,
einem zweiten Konfigurationsmodus, bei dem der erste und der zweite Prozessor und der erste und der zweite Satz Buchsen gestaltet sind, dass sie ein Dualprozessorhauptrechner sind, und
einem dritten Konfigurationsmodus, bei dem der ersten Prozessor und der erste Satz Buchsen gestaltet sind, dass sie ein erster Achsrechner sind, und der zweite Prozessor und der zweite Satz Buchsen gestaltet sind, dass sie ein zweiter Achsrechner sind,
und die Rechnereinheit einen nicht flüchtigen Speicher (8, 9) aufweist, der eine Programmanweisung zum Initiieren der Konfiguration der Rechnereinheit beim Starten der Rechnereinheit aufweist, wobei die Programmanweisungen Information darüber aufweisen, wo Konfigurationsdaten abzufragen sind.

2. Rechnereinheit nach Anspruch 1, bei der die Rechnereinheit angepasst ist, beim Hochfahren Konfigurationsdaten abzufragen und zu speichern, die Information darüber enthalten, mit welchen Peripherieeinheiten der erste und der zweite Satz Buchsen verbunden werden kann.

3. Rechnereinheit nach Anspruch 2, bei der die Konfigurationsdaten Software aufweisen, die auf den Prozessoren läuft, welche Software von dem gewünschten Konfigurationsmodus abhängt.

4. Rechnereinheit nach Anspruch 3, bei der die Konfigurationsdaten Konfigurationsdaten für die Software aufweisen und die Rechnereinheit angepasst ist zum Konfigurieren der Prozessoren und der Software auf gewünschten Rechnern mittels der Konfigurationsdaten.

5. Rechnereinheit nach einem der vorhergehenden Ansprüche, bei der die Rechnereinheit wenigstens eine ersetzbare Massespeichereinheit (14) aufweist, die Konfigurationsdaten für einen der Konfigurationsmodi aufweist, und die Rechnereinheit angepasst ist zum Lesen von Konfigurationsdaten aus der verbundenen Massespeichereinheit und zum entsprechenden Konfigurieren der Rechnereinheit.

6. Rechnereinheit nach Anspruch 5, bei der eine erste der Massespeichereinheiten Konfigurationsdaten für den ersten Konfigurationsmodus aufweist und eine zweite der Massespeichereinheiten Konfigurationsdaten für den zweiten Konfigurationsmodus aufweist.

7. Rechnereinheit nach Anspruch 5 oder 6, bei der die Rechnereinheit angepasst ist zum Bestimmen, ob sie mit einer Massespeichereinheit versehen ist oder nicht, und falls nicht, zum Empfangen von Konfigurationsdaten von einer Peripherieeinheit.

8. Rechnereinheit nach einem der vorhergehenden Ansprüche, bei der der erste Satz Buchsen mit dem ersten Prozessor über einen Bus verbunden ist, der zweite Satz Buchsen mit dem zweiten Prozessor über einen Bus verbunden ist und die Buchsen Verbindungen mit den Peripherieeinheiten sind.

9. Rechnereinheit nach einem der vorhergehenden Ansprüche, bei der, wenn der Computer in den zweiten Konfigurationsmodus konfiguriert ist, der erste Prozessor konfiguriert ist, dass er für einen periodischen und zeitkritischen Ablauf von Ereignissen verantwortlich ist, und der zweite Prozessor konfiguriert ist, dass er für einen ereignisgesteuerten Ablauf der Ereignisse verantwortlich ist.

10. Rechnereinheit nach einem der vorhergehenden Ansprüche, bei der die Rechnereinheit eine erste Verbindung mit Ethernet, die angepasst ist zum Ermöglichen von externer Kommunikation zwischen dem ersten Prozessor und externen Einrichtungen über Ethernet, und eine zweite Verbindung mit Ethernet, die angepasst ist zum Ermöglichen von externer Kommunikation zwischen dem zweiten Prozessor und externen Einrichtungen über das Ethernet, aufweist.

11. Rechnereinheit nach einem der vorhergehenden Ansprüche, bei der, wenn der Rechner in den dritten Konfigurationsmodus konfiguriert ist, der erste Satz Buchsen konfiguriert ist, dass er mit einem ersten Aktor verbunden ist, und der zweite Satz Buchsen konfiguriert ist, dass er mit einem zweiten Aktor verbunden ist.

12. Robotersteuerung, **dadurch gekennzeichnet, dass** sie wenigstens eine Rechnereinheit (1, 1 a-c) nach Anspruch 1 aufweist.

13. Robotersteuerung nach Anspruch 12, bei der die Rechnereinheit (1a) gemäß dem ersten Konfigurationsmodus konfiguriert ist.

14. Robotersteuerung nach Anspruch 13, bei der die Robotersteuerung wenigstens zwei Rechnereinheiten (1 b-c) nach Anspruch 1 aufweist, bei der eine erste der Rechnereinheiten (1b) gemäß dem zweiten Konfigurationsmodus konfiguriert ist, und eine zweite der Rechnereinheiten (1c) gemäß dem dritten Konfigurationsmodus konfiguriert ist.

15. Basismodul (20) für eine Robotersteuerung, mit einem Gehäuse (21), einer Energiezufuhr (30) und einer Antriebseinheit (22), die angepasst ist zum Steuern von Motoren eines Manipulators, **dadurch gekennzeichnet, dass** das Basismodul eine Rechnereinheit nach Anspruch 1 auf weist.

16. Basismodul nach Anspruch 15, bei dem das Modul (20) mit einer Öffnung (29) versehen ist, die zum Aufnehmen der Rechnereinheit gestaltet ist.

17. Robotersteuerung, **dadurch gekennzeichnet, dass** sie wenigstens zwei einzelne Basismodule (20a-d) nach Anspruch 15 aufweist, bei der ein erstes der Basismodule (20a) eine Rechnereinheit (1b) aufweist, die als ein Hauptrechner konfiguriert ist, und ein zweites der Basismodule (20b) eine Rechnereinheit (1c) aufweist, die als Zwei-Achscomputer konfiguriert ist.

## Revendications

1. - Unité d'ordinateur (1, 1a-c) pour un contrôleur de robot, l'unité d'ordinateur comprenant :
- un premier et un second processeur (2, 3) ;
- un premier ensemble d'interfaces de connexion (5a-d) apte à permettre une communication externe entre le premier processeur et des unités périphériques ;
- un second ensemble d'interfaces de connexion (6a-d) apte à permettre une communication externe entre le second processeur et des unités périphériques ; et
- une connexion (4) entre les premier et second processeurs pour permettre une communication interne entre les processeurs,
**caractérisé par le fait que** l'unité d'ordinateur est apte à changer une configuration entre trois types de modes de configuration, à savoir:
- un premier mode de configuration dans lequel ledit premier processeur et ledit premier ensemble d'interfaces de connexion sont configurés pour être un ordinateur principal et lesdits second processeur et second ensemble d'interfaces de connexion sont configurés pour être un ordinateur d'axe ;
- un second mode de configuration dans lequel lesdits premier et second processeurs et lesdits premier et second ensembles d'interfaces de connexion sont configurés pour être un ordinateur principal à double processeur ; et
- un troisième mode de configuration dans lequel ledit premier processeur et ledit premier ensemble d'interfaces de connexion sont configurés pour être un premier ordinateur d'axe et lesdits second processeur et second ensemble d'interfaces de connexion sont configurés pour être un second ordinateur d'axe ;
et l'unité d'ordinateur comprend une mémoire non volatile (8, 9) comprenant une instruction de programme pour l'initiation de la configuration de l'unité d'ordinateur lors du démarrage de l'unité d'ordinateur, lesdites instructions de programme comprenant des informations sur l'emplacement à partir duquel des données de configuration doivent être récupérées.

2. - Unité d'ordinateur selon la revendication 1, dans laquelle l'unité d'ordinateur est apte, lors du démarrage, à récupérer et à stocker des données de configuration comprenant des informations sur les unités périphériques auxquelles lesdits premier et second ensembles d'interfaces de connexion peuvent être connectés.

3. - Unité d'ordinateur selon la revendication 2, dans laquelle lesdites données de configuration comprennent un logiciel devant être exécuté sur les processeurs, lequel logiciel dépend du mode de configuration désiré.

4. - Unité d'ordinateur selon la revendication 3, dans laquelle les données de configuration comprennent des données de configuration pour ledit logiciel, et ladite unité d'ordinateur est apte à configurer les processeurs et ledit logiciel en des ordinateurs désirés aux moyens desdites données de configuration.

5. - Unité d'ordinateur selon l'une quelconque des revendications précédentes, dans laquelle ladite unité d'ordinateur comprend au moins une unité de stockage en masse remplaçable (14) comprenant des données de configuration pour l' un desdits modes de configuration, et l'unité d'ordinateur est apte à lire des données de configuration à partir de l'unité de stockage de masse connectée et à configurer l'unité d'ordinateur en conséquence.

6. - Unité d'ordinateur selon la revendication 5, dans laquelle une première desdites unités de stockage en masse comprend des données de configuration pour ledit premier mode de configuration et une seconde desdites unités de stockage de masse comprend des données de configuration pour ledit second mode de configuration.

7. - Unité d'ordinateur selon l'une des revendications 5 ou 6, dans laquelle l'unité d'ordinateur est apte à déterminer si ou non elle est dotée d'une unité de stockage de masse, et sinon à recevoir des données de configuration provenant d'une unité périphérique.

8. - Unité d'ordinateur selon l'une quelconque des revendications précédentes, dans laquelle ledit premier ensemble d'interfaces de connexion est connecté au premier processeur par l'intermédiaire d'un bus, ledit second ensemble d'interfaces de connexion est connecté au second processeur par l'intermédiaire d'un bus, et lesdites interfaces de connexion sont des connexions vers les unités périphériques.

9. - Unité d'ordinateur selon l'une quelconque des revendications précédentes, dans laquelle, lorsque l'ordinateur est configuré dans ledit second mode de configuration, le premier processeur est configuré pour être responsable d'un déroulement périodique et critique dans le temps d'événements et le second processeur est configuré pour être responsable d'un déroulement d'événements commandé par des événements.

10. - Unité d'ordinateur selon l'une quelconque des revendications précédentes, dans laquelle l'unité d'ordinateur comprend une première connexion à Ethernet apte à permettre une communication externe entre le premier processeur et des dispositifs externes par l'intermédiaire d'Ethernet, et une seconde connexion à Ethernet apte à permettre une communication externe entre le second processeur et des dispositifs externes par l'intermédiaire d'Ethernet.

11. - Unité d'ordinateur selon l'une quelconque des revendications précédentes, dans laquelle, lorsque l'ordinateur est configuré dans ledit troisième mode de configuration, le premier ensemble d'interfaces de connexion est configuré pour être connecté à un premier actionneur, et le second ensemble d'interfaces de connexion est configuré pour être connecté à un second actionneur.

12. - Contrôleur de robot, **caractérisé par le fait qu'**il comprend au moins une unité d'ordinateur (1, 1a-c) telle que définie à la revendication 1.

13. - Contrôleur de robot selon la revendication 12, dans lequel l'unité d'ordinateur (1a) est configurée conformément audit premier mode de configuration.

14. - Contrôleur de robot selon la revendication 13, dans lequel le contrôleur de robot comprend au moins deux unités d'ordinateur (1b-c) telles que définies à la revendication 1, une première des unités d'ordinateur (1b) étant configurée conformément audit second mode de configuration, et une seconde des unités d'ordinateur (1c) étant configurée conformément audit troisième mode de configuration.

15. - Module de base (20) pour un contrôleur de robot comprenant, une armoire (21), une alimentation en courant (30) et une unité de commande (22) apte à commander des moteurs d'un manipulateur, **caractérisé par le fait que** le module de base comprend une unité d'ordinateur telle que définie à la revendication 1.

16. - Module de base selon la revendication 15, dans lequel le module (20) est doté d'une ouverture (29) agencée pour recevoir ladite unité d'ordinateur.

17. - Contrôleur de robot, **caractérisé par le fait qu'**il comprend au moins deux modules de base séparés (20ad) tels que définis à la revendication 15, un premier desdits modules de base (20a) comprenant une unité d'ordinateur (1b) configurée en tant qu'ordinateur principal et un second desdits modules de base (20b) comprenant une unité d'ordinateur (1c) configurée en tant que deux ordinateurs d'axe.
